# EUROPEAN PATENT SPECIFICATION

(11) **EP 2 216 569 B1**
(45) Date of publication and mention of the grant of the patent: **07.03.2012**
(21) Application number: 10151921.3
(22) Date of filing: 28.01.2010
(51) Int. Cl.: F16J 15/12, F01N 13/18

(54) **Hybrid seals**
Hybriddichtungen
Joints hybrides

(30) Priority: 05.02.2009 US 365958
(43) Date of publication of application: 11.08.2010
(73) Proprietor: ACS Industries, Inc., Lincoln, RI 02865 (US)
(72) Inventor: Kircanski, Zlatomir, Cumberland, RI 02864 (US); MacKenzie, Scott J., Lexington, MA 02421 (US)
(74) Representative: Maughan, Sophie Louise

(56) References cited:
- US-A- 4 417 733
- US-A- 5 451 064
- US-A1- 2004 207 162

## Description

### FIELD

This disclosure relates to hybrid seals and hybrid gaskets (referred to herein collectively as "hybrid seals") that employ a composite of a flexible, non-metallic, heat resistant material (e.g., graphite or mica) and an overknitted wire mesh.

### BACKGROUND

This disclosure relates to hybrid seals, including hybrid sliding seals, useful for high temperature applications, such as in conduits for combustion exhaust gases. Applications utilizing high temperature seals are described in US 4683010, US 4951954, US 6286840, US 7012195, and International Publication No. WO 2007/103327.

Flexible graphite, such as described in US 3404061 (the disclosure of which is incorporated herein by reference), has been known for decades. It is sold under such trademarks as GRAFOIL (Graftech International Holdings Inc., Parma, Ohio). Flexible graphite sheet is a rolled sheet product manufactured by taking a high quality particulate graphite flake and processing it through an intercalation process using strong mineral acids. The flake is then heated to volatilize the acids and expand the flake to many times its original size. The expansion process produces a wormlike, dendritic-like structure that can be readily formed by molding or calendaring into sheets. Binders are generally not introduced in the manufacturing process. The result is a gasket sheet product that exhibits excellent tensile strength and, for industrial applications, typically exceeds 97% elemental carbon by weight.

Seals made from flexible graphite sheet are typically made by stamping or cutting a circular piece from the sheet (or a perimeter of the desired geometry), which leads to a significant amount of waste of the expensive graphite material.

In light of the desirability of using graphite and seeking to reduce waste of the flexible graphite sheet material, this disclosure provides a high temperature seal using a flexible graphite sheet and wasting very little of the graphite sheet, if any, in the manufacturing process. As an alternate to graphite, the disclosure also provides high temperature seals employing other flexible, non-metallic, heat resistant materials such as mica.

U.S. Patent No. 4,417,733 (Usher) discloses a seal produced by placing a flexible strip of refractory sheet material inside of a knitted wire mesh sleeve, forming a preform therefrom, and pressing the preform into the shape of the seal, the pressing causing the sheet material to permeate the voids in the mesh.

U.S. Patent Application Publication No. US 2004/0207162 (Kubota et al) discloses a seal in which a heat resistant material is compressed into meshes of a metal wire net and, in some cases, overlaid with a covering layer formed by placing a heat resistant sheet into a belt-shaped metal wire net and then passing the resulting assembly through rollers.

### SUMMARY

In accordance with an aspect of the present invention there is provided a heat resistance strip as claimed in the appended claims.

In accordance with a further aspect, a hybrid heat resistant strip (107) is provided which has a longitudinal axis and comprises:
(a) a core (111) in the form of a strip, said core comprising a flexible, non-metallic, heat resistant material; and
(b) a metal mesh (113) knitted around the core;
wherein the core (111) and the metal mesh (113) are crimped together subsequent to the mesh (113) having been knitted about the core (111), said crimping producing corrugations that are oriented substantially perpendicular to the longitudinal axis of the strip (107).

Preferably the flexible, non-metallic, heat resistant material comprises graphite.

Preferably the flexible, non-metallic, heat resistant material comprises mica.

Preferably the core comprises a first layer of flexible, non-metallic, heat resistant material and a second layer of flexible, non-metallic, heat resistant material.

Preferably the first and second layers have the same composition; alternatively the first and second layers have different compositions.

Preferably the core further comprises a layer of a flexible metallic material.

In accordance with another aspect of the present invention there is provided a heat resistant seal as claimed in the appended claims.

Furthermore there is provided a heat resistant seal comprising a hybrid heat resistant strip which has a longitudinal axis and comprises:
(a) a core in the form of a strip, said core comprising a flexible, non-metallic, heat resistant material; and
(b) a metal mesh knitted around the core;
wherein the core and the metal mesh are crimped together subsequent to the mesh having been knitted about the core, said crimping producing corrugations that are oriented substantially perpendicular to the longitudinal axis of the strip,
wherein the strip is formed into a preform and the preform is compressed to form the seal.

Preferably the seal has a rectangular cross-section.

Preferably the seal has an angled cross-section.

Preferably the seal has a cross-section that includes at least one circumferential projection.

Preferably the seal has a curved cross-section.

Preferably in the finished seal, the strip's metal mesh is distributed substantially throughout the strip's flexible, non-metallic, heat resistant material.

In accordance with a yet another aspect of the present invention, a heat resistant seal (117) is provided that comprises a flexible graphite strip (111) overknitted with a wire mesh (113), crimped, and compressed into an annulus wherein the crimping takes place after the overknitting and the crimping produces corrugations that are oriented substantially perpendicular to the longitudinal axis of the strip (111).

In accordance with a further aspect of the present invention there is provided a method of making a hybrid heat resistant seal as claimed in the appended claims.

In accordance with another aspect, a method of making a hybrid heat resistant seal (117) is provided that comprises:
(a) providing a core (111) that comprises a flexible, non-metallic, heat resistant material;
(b) knitting a metal mesh (113) around the core (111) to form a composite (115);
(c) crimping the composite (115);
(d) forming a preform (109) from the crimped composite (115); and
(e) compressing the preform (109) to form the seal (117);
wherein the crimping produces corrugations that are oriented substantially perpendicular to the longitudinal axis of the composite (115) so that the metal mesh (113) is distributed substantially throughout the flexible, non-metallic, heat resistant material after step (e).

Preferably the flexible, non-metallic, heat resistant material is graphite.

Preferably the flexible, non-metallic, heat resistant material is mica.

Preferably the core comprises more than one flexible, non-metallic, heat resistant material.

Preferably the core comprises graphite and mica.

Preferably the core further comprises a flexible metallic material.

The reference numbers used in the above summaries of the various aspects of the disclosure are only for the convenience of the reader and are not intended to and should not be interpreted as limiting the scope of the invention. More generally, it is to be understood that both the foregoing general description and the following detailed description are merely exemplary of the invention and are intended to provide an overview or framework for understanding the nature and character of the invention.

Additional features and advantages of the invention are set forth in the detailed description which follows, and in part will be readily apparent to those skilled in the art from that description or recognized by practicing the invention as described herein. The accompanying drawings are included to provide a further understanding of the invention, and are incorporated in and constitute a part of this specification. It is to be understood that the various features of the invention disclosed in this specification and in the drawings can be used in any and all combinations.

### BRIEF DESCRIPTION OF THE DRAWINGS

FIG. 1 depicts a method of forming a hybrid seal according to certain aspects of this disclosure.
FIG. 2 depicts four representative cross sections of hybrid seals according to this disclosure.
FIG. 3 is a photomicrograph illustrating the integrated structure of hybrid seals according to this disclosure.
FIG. 4 is a photomicrograph illustrating the layered structure of the seals of the prior art.

The reference numbers used in the figures refer to the following:
- 103: sheet of flexible, non-metallic, heat resistant material
- 105: cut line
- 107: hybrid strip
- 109: preform (also referred to as a rolled structure)
- 111: core of hybrid strip (also referred to as a strip)
- 113: metal mesh of hybrid strip
- 115: composite, i.e., overknitted core prior to corrugation
- 117: hybrid seal
- 123: crimping rollers
- 125: projections
- 127: metallic component of hybrid seal
- 129: flexible, non-metallic, heat resistant component of hybrid seal

### DETAILED DESCRIPTION OF THE PREFERRED EMBODIMENTS

As discussed above, in certain of its aspects, this disclosure relates to hybrid heat resistant strips 107 that can be wrapped into a rolled structure 109 (a preform) and then compression molded into a hybrid seal 117, e.g., a hybrid seal for use in an exhaust system. The hybrid strips 107 comprise: (1) a core 111 that comprises a flexible, non-metallic, heat resistant material and (2) a metal mesh 113 knitted around the core wherein the core and the metal mesh are crimped together subsequent to the mesh having been knitted about the core. The crimping is performed to produce corrugations that are oriented substantially perpendicular to the longitudinal axis (length direction) of the hybrid strip.

The flexible, non-metallic, heat resistant material making up the core can be flexible graphite, such as that sold under the GRAFOIL trademark (see above). Alternatively, the flexible, non-metallic, heat resistant material can be mica. The core can comprise a single material or a combination of materials, e.g., the core can comprise one or more strips of graphite and one or more strips of mica. Whatever material or materials are used to form the core, because the core is in the form of a strip, the amount of material that is wasted is substantially reduced in comparison to prior techniques where sheets of the heat resistant material were stamped or cut to produce the desired seal configuration. Indeed for many applications, the wastage can be essentially zero.

Once formed, the core 111 is overknit with the wire mesh 113 using conventional wire knitting equipment. The wire used in the knitting can be ferritic or austenitic wire having a diameter in, for example, the range of 0.1016 to 0.2032 mm (0.004 to 0.008 inches). For example, wire composed of 304, 316 or 430 stainless steel can be used, but other types of wire may also be used depending on the application. The density of the knit will depend on the particular application. For example, knits produced using a knitting head having 6-18 needles produce satisfactory wire meshes surrounding the core. The ends of the overknitted cores can be cut at 90° or at an angle to create a greater surface area for bonding of the ends within the structure of the final seal during the compression process (see below).

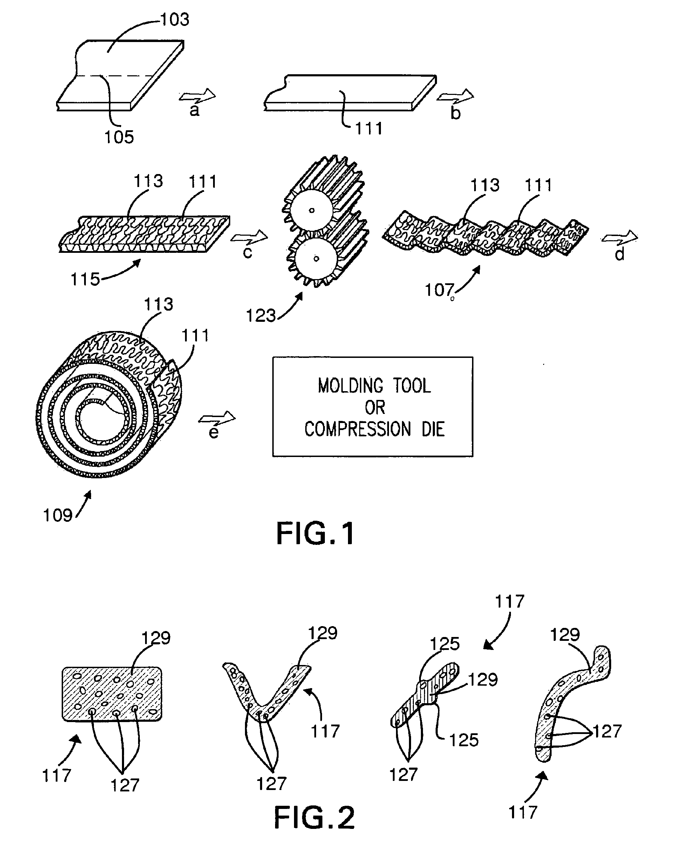

FIG. 1 illustrates a process for producing a hybrid seal. The process begins with a sheet 103 of a flexible, non-metallic, heat resistant material, e.g., graphite. In step (a), the sheet is cut along line 105 parallel to an edge of the sheet to produce core 111 having a length equal to or less than the length of sheet 103, a width defining top and bottom sides, and a thickness being the smallest dimension. In step (b), the core 111 is overknit with ferritic or austenitic wire 113 to form composite 115. Next, in step (c), the composite 115 is crimped by contact with rollers 123, one or both (as shown) of which have ridges for imparting a crimping pattern to produce corrugated hybrid strip 107.

In step (d), hybrid strip 107 is rolled (wound) into preform 109. The winding of the preform can be performed in various ways. For example, the hybrid strip can be wound with its width oriented parallel to the winding axis or at an angle to that axis. Also, the winding can take place in a plane or can move out of a plane to form a helix which typically will have each subsequent turn overlying the previous turn. The pitch (frequency) of the corrugations is selected based on the radius at which the strip will be wound so as to avoid unacceptable stress levels in the strip and/or unacceptable crushing of the corrugations. Generally, a shorter pitch (higher frequency per length) will allow for a smaller winding radius. As a general guide, for a seal having a diameter of 10.16cm (4"), the corrugations will have a pitch of 0.47625-0.635cm (3/16"-1/4"), while for a seal having a diameter of 30.48cm (12"), the corrugations will have a pitch of 0.635-0.79375cm (1/4"-5/16"), although other pitches can, of course, be used for these and other diameters. In general, the depth of the corrugations needs to be great enough to unite the wire mesh with the flexible, non-metallic, heat resistant material. Corrugations having a depth in the range of 0.15875 to 0.47625cm (1/16" to 3/16") have been found suitable for this purpose, although larger or smaller depths can be used for some applications if desired.

Finally, in step (e), preform 109 is subjected to compression molding using a molding tool or a compression die to produce the desired seal. Depending on the mold/die geometry, the finished seal can have a variety of cross-sectional shapes. FIG. 2 illustrates representative examples, i.e., from left to right in the figure, a rectangular cross-section, a V shaped cross-section, a cross-section with circumferential projections 125, and a curved cross-section.

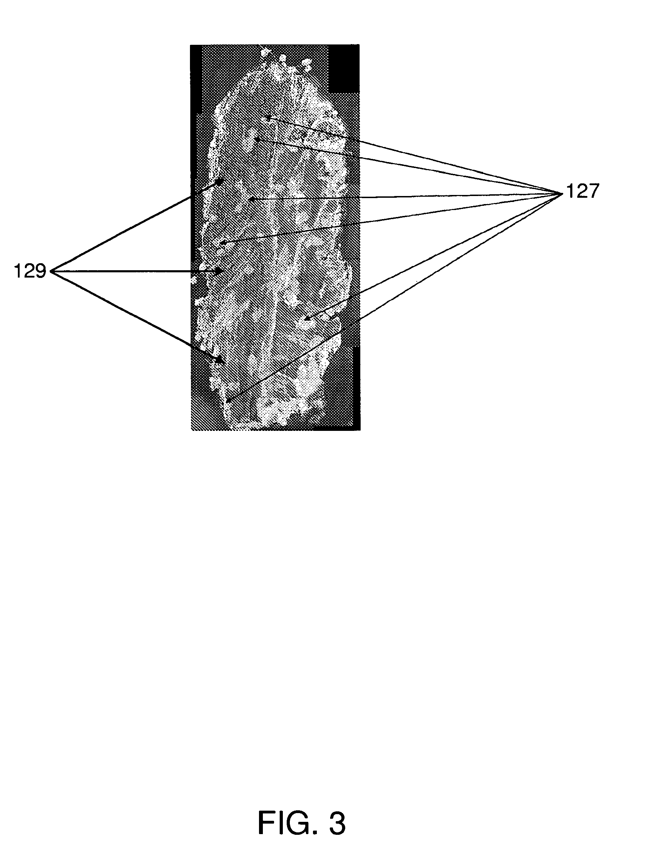

Importantly, irrespective of the particular cross-section used, the hybrid seals have their metal component distributed substantially throughout their non-metallic component, as shown at 127 (metal component) and 129 (non-metallic component). This distributed construction is referred to herein as an "integrated" structure. This integration is a result of the combination of corrugation step (c), which begins the integration, and compression molding step (e), which fully integrates the wire mesh with the flexible, non-metallic, heat resistant material. This full integration is illustrated in FIG. 3 which is a photomicrograph of a cross-section of a seal produced using the method of FIG. 1 with graphite as the flexible, non-metallic, heat resistant material. As can be seen in this figure, the wire mesh and the graphite have been fully united to produce a robust, non-delaminable structure.

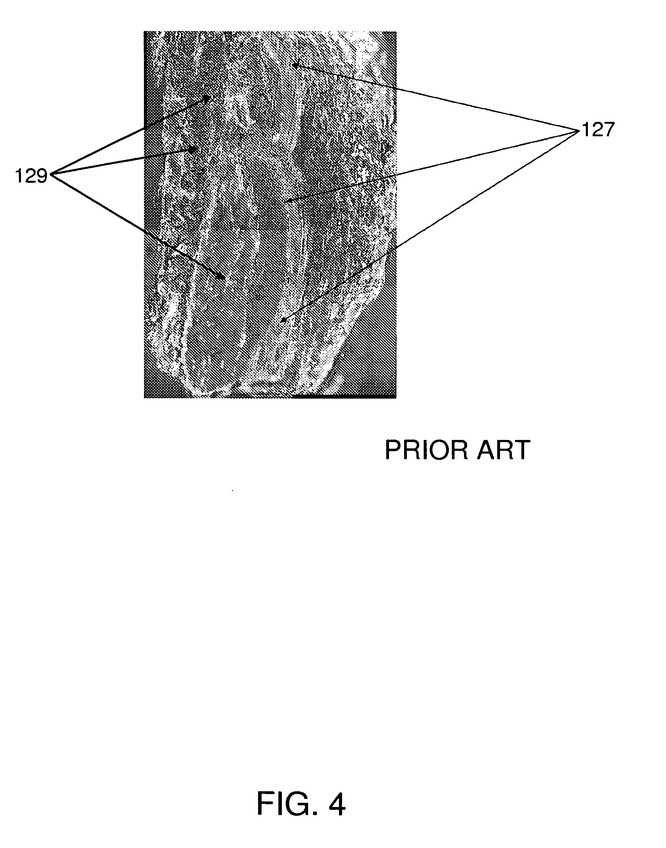

Previous attempts to make a seal including a sheet of a flexible, non-metallic, heat resistant material, e.g., a flexible graphite sheet, and a metal component involved sandwiching the metal component between sheets of the heat resistant material. The molding of such structures gave parts that were susceptible to delamination. FIG. 4 is a photomicrograph of a cross-section through a seal produced using the sandwich approach, where again, graphite was the flexible, non-metallic, heat resistant material. As can be seen, the metallic component and the graphite remain segregated from one another, thus leading to the possibility of separation during use. In contrast, encasing a strip of the flexible material in a wire mesh, corrugating the resulting composite, forming a preform from the composite, and then compressing the preform to produce the seal provides a part that does not delaminate.

The present devices are useful as seals and/or gaskets in applications where gas flow in a conduit is to be channeled to a treatment device (e.g., a catalytic converter), where conduits join by one sliding inside the other, and similar installations. Accordingly, the seals preferably define an annulus having a circular or ellipsoid geometry after molding, although any curved or polygonal geometry (or combination thereof) can be produced if desired.

In summary, this invention provides a high temperature seal comprising a strip of flexible, non-metallic, heat resistant material, e.g., graphite, overknit and crimped and compressed (formed) into a desired geometry, e.g., an oval or circular geometry.

A variety of modifications that do not depart from the scope of the invention will be evident to persons of ordinary skill in the art from the foregoing disclosure. For example, although the invention has been described in terms of cores which are composed of one or more flexible, non-metallic, heat resistant materials, the core can in addition include one or more layers of a metal substrate such as a woven or knitted mesh strip or a strip of flexible expanded metal. The inclusion of such a substrate will generally result in a more rigid finished seal. The following claims are intended to cover the specific embodiments set forth herein as well as modifications, variations, and equivalents of those embodiments of the foregoing and other types.

## Claims

1. A hybrid heat resistant strip (107) which has a longitudinal axis and comprises:
(a) a core (111) in the form of a strip, said core comprising a flexible, non-metallic, heat resistant material; and
(b) a metal mesh (113) knitted around the core;
**characterized in that** the core (111) and the metal mesh (113) are crimped together subsequent to the mesh (113) having been knitted about the core (111), said crimping producing corrugations that are oriented substantially perpendicular to the longitudinal axis of the strip (107).

2. The strip (107) of Claim 1 wherein the flexible, non-metallic, heat resistant material comprises graphite and/or mica.

3. The strip (107) of any preceding claim wherein the core (111) comprises a first layer of flexible, non-metallic, heat resistant material and a second layer of flexible, non-metallic, heat resistant material.

4. The strip (107) of Claim 3 wherein the first and second layers have the same composition.

5. The strip (107) of Claim 3 wherein the first and second layers have different compositions.

6. The strip (107) of any of preceding claim wherein the core (111) further comprises a layer of a flexible metallic material.

7. A heat resistant seal (117) comprising a strip (107) according to any preceding claim, wherein the strip (107) is formed into a preform (109) and the preform (109) is compressed to form the seal (117).

8. A heat resistant seal (117) comprising a flexible graphite strip (111) overknitted with a wire mesh (113), crimped, and compressed into an annulus **characterized in that** the crimping takes place after the overknitting and the crimping produces corrugations that are oriented substantially perpendicular to the longitudinal axis of the strip (111).

9. A method of making a hybrid heat resistant seal (117) comprising:
(a) providing a core (111) that comprises a flexible, non-metallic, heat resistant material;
(b) knitting a metal mesh (113) around the core (111) to form a composite (115);
(c) crimping the composite (115);
(d) forming a preform (109) from the crimped composite (115); and
(e) compressing the preform (109) to form the seal (117);
**characterized in that** the crimping produces corrugations that are oriented substantially perpendicular to the longitudinal axis of the composite (115) so that the metal mesh (113) is distributed substantially throughout the flexible, non-metallic, heat resistant material after step (e).

10. The method of Claim 9 wherein the flexible, non-metallic, heat resistant material is graphite and/or mica.

11. The method of Claim 9 or Claim 10 wherein the core (111) comprises more than one flexible, non-metallic, heat resistant material.

12. The method of any of claims 9 to 11 wherein the core (111) further comprises a flexible metallic material.

## Patentansprüche

1. Wärmebeständiger Hybrid-Streifen (107), der eine Längsachse aufweist und Folgendes umfasst:
(a) einen Kern (111) in der Form eines Streifens, wobei der Kern ein flexibles nichtmetallisches wärmebeständiges Material umfasst; und
(b) ein Metall-Maschenwerk (113), das um den Kern herum gewirkt ist;
**dadurch gekennzeichnet, dass** der Kern (111) und das Metall-Maschenwerk (113) nach dem Wirken des Maschenwerkes (113) um den Kern (111) zusammengepresst werden wobei das Zusammenpressen Riffellungen erzeugt, die im Wesentlichen senkrecht zur Längsachse des Streifens (107) ausgerichtet sind.

2. Streifen (107) nach Anspruch 1, bei dem das flexible nichtmetallische wärmebeständige Material Graphit oder Glimmer umfasst.

3. Streifen (107) nach einem der vorhergehenden Ansprüche, bei dem der Kern (111) eine erste Schicht aus einem flexiblen nichtmetallischen wärmebeständigen Material und eine zweite Schicht aus flexiblen nichtmetallischen wärmebeständigen Material umfasst.

4. Streifen (107) nach Anspruch 3, bei der die ersten und zweiten Schichten die gleiche Zusammensetzung aufweisen.

5. Streifen (107) nach Anspruch 3, bei der die ersten und zweiten Schichten unterschiedliche Zusammensetzungen aufweisen.

6. Streifen (107) nach einem der vorhergehenden Ansprüche, bei dem der Kern (111) weiterhin eine Schicht aus einem flexiblen Metallmaterial umfasst.

7. Wärmebeständige Dichtung (117), die einen Streifen (107) nach einem der vorhergehenden Ansprüche umfasst, wobei der Streifen (107) auf einen Vorformling (109) geformt und der Vorformling (109) komprimiert wird, um die Dichtung (117) zu bilden.

8. Wärmebeständige Dichtung (117), die einen flexiblen Graphit-Streifen (111) umfasst, der mit einem Draht-Maschenwerk (113) umwirkt, zusammengepresst und zu einem Ring komprimiert ist, **dadurch gekennzeichnet, dass** das Zusammenpressen nach dem Umwirken erfolgt und dass das Zusammenpressen Riffelungen erzeugt, die im Wesentlichen senkrecht zur Längsachse des Streifens ausgerichtet sind.

9. Verfahren zur Herstellung einer wärmebeständigen Hybrid-Dichtung (117) mit den folgenden Schritten:
(a) Bereitstellen eines Kerns (111), der ein flexibles nichtmetallisches wärmebeständiges Material umfasst;
(b) Wirken eines Metall-Maschenwerkes (113) um den Kern (111), um ein zusammengesetztes Element (115) zu bilden;
(c) Zusammenpressen des zusammengesetzten Materials (115);
(d) Bilden eines Vorformlings (109) aus dem zusammengedrückten zusammengesetzten Material (115); und
(e) Komprimieren des Vorformlings (109) zur Bildung der Dichtung;
**dadurch gekennzeichnet, dass** das Zusammenpressen Riffelungen erzeugt, die im Wesentlichen senkrecht zur Längsachse des zusammengesetzten Materials (115) ausgerichtet sind, so dass das Metall-Maschenwerk (113) im Wesentlichen über das gesamte flexible nichtmetallische wärmebeständige Material nach dem Schritt (e) verteilt ist.

10. Verfahren nach Anspruch 9, bei dem das flexible nichtmetallische wärmebeständige Material Graphit und/oder Glimmer ist.

11. Verfahren nach Anspruch 9 oder 10, bei dem der Kern (111) mehr als ein flexibles nichtmetallisches wärmebeständiges Material umfasst.

12. Verfahren nach einem der Ansprüche 9 bis 11, bei dem der Kern (111) weiterhin ein flexibles metallisches Material umfasst.

## Revendications

1. Bande hybride thermorésistante (107) qui a un axe longitudinal et comprend :
(a) un noyau (111) se présentant sous la forme d'une bande, ledit noyau comprenant un matériau thermorésistant non métallique souple ; et
(b) un treillis métallique (113) tricoté autour du noyau ;
**caractérisée en ce que** l'âme (111) et le treillis métallique (113) sont sertis ensemble après que le treillis (113) a été tricoté autour du noyau (111), ledit sertissage produisant des ondulations qui sont orientées de manière sensiblement perpendiculaire à l'axe longitudinal de la bande (107).

2. Bande (107) selon la revendication 1, dans laquelle le matériau thermorésistant, non métallique, souple comprend du graphite et/ou du mica.

3. Bande (107) selon l'une quelconque des revendications précédentes, dans laquelle le noyau (111) comprend une première couche de matériau thermorésistant non métallique souple et une deuxième couche de matériau thermorésistant non métallique souple.

4. Bande (107) selon la revendication 3, dans laquelle les première et deuxième couches ont la même composition.

5. Bande (107) selon la revendication 3, dans laquelle les première et deuxième couches ont des compositions différentes.

6. Bande (107) selon l'une quelconque des revendications précédentes, dans laquelle le noyau (111) comprend en outre une couche de matériau métallique souple.

7. Joint d'étanchéité thermorésistant (117) comprenant une bande (107) selon l'une quelconque des revendications précédentes, dans lequel la bande (107) est formée dans une préforme (109) et la préforme (109) est comprimée afin de former le joint d'étanchéité (117).

8. Joint d'étanchéité thermorésistant (117) comprenant une bande de graphite souple (111) tricotée avec un treillis métallique (113), sertie et comprimée dans un anneau, **caractérisé en ce que** le sertissage a lieu après le tricotage et le sertissage produit des ondulations qui sont orientées de manière sensiblement perpendiculaire à l'axe longitudinal de la bande (111).

9. Procédé pour fabriquer un joint d'étanchéité hybride thermorésistant (117) comprenant les étapes consistant à :
(a) fournir un noyau (111) qui comprend un matériau thermorésistant, non métallique, souple ;
(b) tricoter un treillis métallique (113) autour du noyau (111) afin de former un composite (115) ;
(c) sertir le composite (115) ;
(d) former une préforme (109) à partir du composite serti (115) ; et
(e) comprimer la préforme (109) afin de former le joint d'étanchéité (117) ;
**caractérisé en ce que** le sertissage produit des ondulations qui sont orientées de manière sensiblement perpendiculaire à l'axe longitudinal du composite (115) de sorte que la maille métallique (113) est répartie sensiblement sur tout le matériau thermorésistant, non métallique, souple, après l'étape (e).

10. Procédé selon la revendication 9, dans lequel le matériau thermorésistant, non métallique, souple est du graphite et/ou du mica.

11. Procédé selon la revendication 9 ou la revendication 10, dans lequel le noyau (111) comprend plus d'un matériau thermorésistant, non métallique, souple.

12. Procédé selon l'une quelconque des revendications 9 à 11, dans lequel le noyau (111) comprend en outre un matériau métallique souple.
